# EUROPEAN PATENT APPLICATION

(11) **EP 4 848 409 A1**
(43) Date of publication of application: **02.12.2026**
(21) Application number: 24950946.4
(22) Date of filing: 12.08.2024
(51) Int. Cl.: H01M 10/613, H01M 50/30, H01M 50/375, H01M 50/383

(54) **ENERGY STORAGE DEVICE AND ENERGY STORAGE SYSTEM**

(71) Applicant: Contemporary Amperex Technology Co., Limited, Ningde, Fujian 352100 (CN)
(72) Inventor: LI, Qing, Ningde, Fujian 352100 (CN); HONG, Jiarong, Ningde, Fujian 352100 (CN); SONG, Zirui, Ningde, Fujian 352100 (CN); YU, Dongxu, Ningde, Fujian 352100 (CN); LI, Zhonghong, Ningde, Fujian 352100 (CN); HE, Shuangjiang, Ningde, Fujian 352100 (CN)
(74) Representative: Kraus & Lederer PartGmbB
(86) International application number: PCT/CN2024/111558
(87) International publication number: WO 2026/036258

(57) **Abstract**

Provided in the present application are an energy storage device and an energy storage system. The energy storage device comprises a first compartment and a battery device, wherein the first compartment comprises a first top wall and a first side wall connected to each other; the first top wall is provided with an exhaust mechanism, which can communicate the interior of the first compartment with the outside; and the first compartment accommodates the battery device. Since the first side wall mainly plays a role in supporting and load bearing in the first compartment, and the exhaust mechanism, which communicates the interior of the first compartment with the outside, is arranged on the first top wall instead of the first side wall, the impact of the arrangement of the exhaust mechanism on the structure of the first side wall is reduced, thereby reducing the impact of the arrangement of the exhaust mechanism on the supporting effect and load-bearing capacity of the wall of the first compartment, facilitating an improvement in the stress condition of the energy storage device and facilitating an improvement in the reliability of the energy storage device.

## Description

### TECHNICAL FIELD

The present application relates to the technical field of energy storage apparatuses, and particularly to an energy storage apparatus and an energy storage system.

### BACKGROUND

Battery apparatuses have advantages such as high specific energy and high power density, and are widely used in energy storage apparatuses such as energy storage containers or energy storage cabinets. Energy storage apparatuses can be used in energy storage power stations, wind power generation systems, solar power generation systems, mobile power systems, or temporary power supply systems, and the like.

Because energy storage apparatuses have advantages such as large capacity and high degree of integration, their application range is becoming wider and wider, and how to improve the reliability of energy storage apparatuses is receiving increasing attention from those skilled in the art.

### SUMMARY OF THE INVENTION

In view of the above problems, the present application provides an energy storage apparatus and an energy storage system, and the energy storage apparatus has good reliability.

In a first aspect, some embodiments of the present application provide an energy storage apparatus, which includes a first compartment and a battery apparatus. The first compartment includes a first top wall and a first side wall connected to each other. The first top wall is provided with a first exhaust mechanism, which can communicate the interior of the first compartment with the outside. The first compartment accommodates the battery apparatus.

Since the first side wall mainly plays a role in supporting and load bearing in the first compartment, and the exhaust mechanism, which communicates the interior of the first compartment with the outside, is arranged on the first top wall instead of the first side wall, the impact of the arrangement of the exhaust mechanism on the structure of the first side wall is reduced, thereby reducing the impact of the arrangement of the exhaust mechanism on the supporting effect and load-bearing capacity of the wall of the first compartment, facilitating an improvement in the stress condition of the energy storage device and facilitating an improvement in the reliability of the energy storage apparatus.

According to some embodiments of the present application, the energy storage apparatus further includes a second compartment and a heat exchange assembly. The second compartment is used to accommodate the heat exchange assembly and is connected to the upper side of the first compartment. The first compartment can communicate with the second compartment through the first exhaust mechanism. The second compartment is provided with a first air vent and a second air vent. The heat exchange assembly includes a radiator and a fan. The radiator is arranged in the second compartment. An air inlet of the fan communicates with the second compartment, and an air outlet of the fan communicates with the second air vent.

With the above structure, when the radiator is exchanging heat with the external environment, the fan can increase the air flow rate around the radiator by accelerating the speed at which air is discharged from the second compartment, thereby improving the heat exchange effect of the radiator. When smoke, high-temperature gas, flammable and explosive gas and other substances inside the first compartment are discharged to the second compartment through the exhaust mechanism, the fan can accelerate the speed at which air is discharged from the second compartment, thereby quickly expelling the smoke, high-temperature gas, flammable and explosive gas and other substances to the outside, which can reduce the possibility of fire inside the energy storage apparatus.

According to some embodiments of the present application, the energy storage apparatus further includes a thermal management pipeline that communicates the battery apparatus with the radiator, allowing the heat exchange medium to circulate between the radiator and the battery apparatus.

According to some embodiments of the present application, the energy storage apparatus further includes a third compartment. The third compartment accommodates a battery apparatus. The third compartment is connected to the lower side of the first compartment and includes a third top wall. The third top wall is provided with a third exhaust mechanism. The third exhaust mechanism can communicate the interior of the third compartment with the interior of the first compartment, allowing smoke, high-temperature gas, flammable and explosive gas, and other substances inside the third compartment to be discharged to the first compartment through the third exhaust mechanism. This reduces the concentration of the smoke, high-temperature gas, flammable and explosive gas, and other substances inside the third compartment, thereby reducing the possibility of fire inside the third compartment.

According to some embodiments of the present application, in the energy storage apparatus, the first compartment further includes a first bottom wall opposite to the first top wall, the first bottom wall being connected to the first side wall, and the first bottom wall having a first gas vent. In the vertical direction, the first gas vent overlaps at least partially with the third exhaust mechanism, so that smoke, high-temperature gas, and flammable and explosive gas, and other substances discharged from the third compartment via the third exhaust mechanism can enter the first compartment through the first gas vent.

According to some embodiments of the present application, in the energy storage apparatus, in the vertical direction, the projection of the third exhaust mechanism is located within the projection range of the first gas vent, allowing the third exhaust mechanism to be inserted into the first compartment through the first gas vent when the third compartment is connected to the lower side of the first compartment. This not only improves the smoothness of exhaust by the third exhaust mechanism but also reduces the possibility of interference when the third compartment is connected to the lower side of the first compartment.

According to some embodiments of the present application, in the energy storage apparatus, at least two first compartments are provided and the third compartment is located on the lower side of the at least two first compartments. In the vertical direction, the exhaust mechanism of the lower first compartment of two adjacent first compartments overlaps at least partially with the first gas vent of the upper first compartment, so that the smoke, high-temperature gas, flammable and explosive gas and other substances discharged from the lower first compartment of two adjacent first compartments via the exhaust mechanism can enter the upper first compartment through the first gas vent.

According to some embodiments of the present application, in the energy storage apparatus, in the vertical direction, the projection of the exhaust mechanism of the lower first compartment of two adjacent first compartments is located within the projection range of the first gas vent of the upper first compartment, which can improve the smoothness of exhaust from the first compartment to the adjacent first compartment through the exhaust mechanism.

According to some embodiments of the present application, in the energy storage apparatus, the exhaust mechanism of the lower first compartment of two adjacent first compartments extends at least partially into the upper first compartment through the first gas vent. This not only reduces the possibility of interference when one first compartment is stacked on top of another first compartment, but also improves the smoothness of exhaust into the first compartment through the exhaust mechanism.

According to some embodiments of the present application, in the energy storage apparatus, the second compartment is provided with a blocking member for opening or closing the first air vent. When the first exhaust mechanism communicates the first compartment with the second compartment, the blocking member closes the first air vent, allowing smoke, high-temperature gas, flammable and explosive gas, and other substances entering the second compartment from the first compartment to be better discharged to the outside through the second air vent under the action of the fan. When the first exhaust mechanism does not communicate the first compartment with the second compartment, the blocking member opens the first air vent, allowing fresh air from the outside to enter the second compartment through the first air vent under the action of the fan, and dissipating the heat emitted by the radiator to the outside through the second air vent.

According to some embodiments of the present application, in the energy storage apparatus, in the vertical direction, the projection of the first air vent is separate from the projection of the first exhaust mechanism, so that when rainwater from the outside enters the second compartment through the first air vent, it is less likely to fall onto the first exhaust mechanism, which can reduce the possibility of rainwater entering the first compartment through the first exhaust mechanism.

According to some embodiments of the present application, in the energy storage apparatus, in the vertical direction, the projection of the second air vent is separate from the projection of the first exhaust mechanism, so that when rainwater from the outside enters the second compartment through the second air vent, it is less likely to fall onto the first exhaust mechanism, which can reduce the possibility of rainwater entering the first compartment through the first exhaust mechanism.

According to some embodiments of the present application, in the energy storage apparatus, the first air vent and the second air vent are respectively arranged on two sides of the radiator, so that the fresh air from the outside entering the second compartment through the first air vent will be discharged through the second air vent after flowing through the radiator, which can improve the heat exchange effect of the radiator.

According to some embodiments of the present application, in the energy storage apparatus, the second compartment includes a second top wall and a second side wall connected to each other, the second air vent is formed in the second top wall and/or the second side wall, and the fan is arranged in the second compartment and at the second air vent, so that the fan can smoothly discharge the gas in the second compartment to the outside through the second air vent.

According to some embodiments of the present application, in the energy storage apparatus, the second compartment includes a second top wall and a second side wall connected to each other, the second air vent is formed in the second top wall and/or the second side wall, and the fan is arranged at the second air vent and projects at least partially from the second compartment, so that the fan can smoothly discharge the gas in the second compartment to the outside of the second compartment.

According to some embodiments of the present application, in the energy storage apparatus, the first air vent and the second air vent are both arranged on the second side wall and the first air vent and the second air vent are respectively arranged opposite to each other on two sides of the radiator. This not only reduces the possibility of rainwater from the outside entering the second compartment from the first top wall, but also ensures that fresh air from the outside entering the second compartment through the first air vent will be discharged through the second air vent after flowing through the radiator, which can improve the heat exchange effect of the radiator.

According to some embodiments of the present application, the energy storage apparatus further includes an electrical component and a fourth compartment. The electrical component is arranged in the fourth compartment and electrically connected to the battery apparatus. The electrical component can be protected by the fourth compartment.

According to some embodiments of the present application, in the energy storage apparatus, in the vertical direction, the fourth compartment is arranged between the first compartment and the second compartment, so that the fourth compartment is relatively close to the first compartment, so that smoke, high-temperature gas, flammable and explosive gas, and other substances in the fourth compartment can more easily enter the first compartment and be discharged into the outside air.

According to some embodiments of the present application, the energy storage apparatus further includes a fire protection assembly, which includes a tank and a spray member in communication with each other. The tank is arranged in the second compartment, and the spray member is arranged in the first compartment. By arranging the tank in the second compartment, the internal space occupied by the fire protection assembly inside the first compartment can be reduced and the energy density of the first compartment can be improved. The tank and the spray member communicate with each other through pipelines, and the spray member is arranged in the first compartment so that the fire extinguishing medium in the tank can be sprayed onto the electrical apparatus through the spray member.

According to some embodiments of the present application, the energy storage apparatus further includes a power conversion apparatus, which is arranged in the second compartment and electrically connected to the battery apparatus. This can reduce the internal space occupied in the first compartment and improve the energy density of the first compartment.

According to some embodiments of the present application, the energy storage apparatus further includes a power conversion apparatus, which is arranged in the first compartment and electrically connected to the battery apparatus, so that the power conversion apparatus can be transferred together with the battery apparatus in the first compartment, which facilitates the installation of the power conversion apparatus in the energy storage apparatus.

According to some embodiments of the present application, in the energy storage apparatus, the first exhaust mechanism includes a first exhaust port formed in the first top wall and a first sealing member covering the first exhaust port. The first sealing member can be switched between a first state and a second state. In the first state, the first sealing member closes the first exhaust port, and in the second state, the first sealing member opens the first exhaust port. By forming the first exhaust port on the first top wall, the smoke, high-temperature gas, flammable and explosive gas and other substances inside the first compartment can be discharged to the outside through the first exhaust port, so that the smoke, high-temperature gas, flammable and explosive gas and other substances in the first compartment can be smoothly discharged to the outside or other compartments.

According to some embodiments of the present application, in the energy storage apparatus, the first exhaust mechanism further includes a water-blocking structure connected to the first top wall and located on the upper side of the first top wall. The water-blocking structure surrounds the first exhaust port to reduce the amount of accumulated water entering the first exhaust port.

According to some embodiments of the present application, in the energy storage apparatus, the water-blocking structure includes a baffle bar connected to the first top wall and wound around the first exhaust port. By including the baffle bar in the water-blocking structure, materials used in the water-blocking structure can be saved and the cost of the water-blocking structure can be reduced.

According to some embodiments of the present application, in the energy storage apparatus, a plurality of baffle bars are provided and are connected in sequence and wound around the first exhaust port, so that the plurality of baffle bars can be connected to form a water-blocking structure surrounding the first exhaust port, reducing the possibility of accumulated water outside the first exhaust port entering the first exhaust port.

According to some embodiments of the present application, in the energy storage apparatus, two adjacent baffle bars are glued or welded, which reduces the possibility of gaps between two adjacent baffle bars and reduces the possibility of water seepage, thereby improving the water blocking capacity of the water-blocking structure formed by the baffle bars.

According to some embodiments of the present application, in the energy storage apparatus, the water-blocking structure and the first top wall are of an integrally formed structure.

According to some embodiments of the present application, in the energy storage apparatus, the water-blocking structure is glued or welded to the first top wall, which reduces the possibility of gaps between the water-blocking structure and the first top wall and reduces the possibility of water seepage, thereby improving the water blocking capacity of the water-blocking structure formed by the baffle bars.

According to some embodiments of the present application, in the energy storage apparatus, a drainage groove is provided on the upper side of the first top wall and communicates with the outer wall face of the first side wall. By providing the drainage groove on the upper side of the first top wall and communicating the drainage groove with the outer wall face of the first side wall, the accumulated water on the upper side of the first top wall can flow into the drainage groove and flow along the drainage groove to the outer wall face of the first side wall and flow down from the first compartment.

According to some embodiments of the present application, in the energy storage apparatus, a second exhaust port is formed on the first side wall. The second exhaust port can communicate the interior of the first compartment with the outside. The second exhaust port is covered with a second sealing member, which can be switched between a first state and a second state. In the first state, the second sealing member closes the second exhaust port. In the second state, the second sealing member opens the second exhaust port, so that smoke, high-temperature gas, flammable and explosive gas and other substances inside the first compartment can also be discharged to the outside through the second exhaust port, which can improve the ability of the first compartment to discharge the smoke, high-temperature gas, flammable and explosive gas and other substances.

In a second aspect, some embodiments of the present application further provide an energy storage system which includes a power conversion apparatus and an energy storage apparatus provided by any of the technical solutions above, and the power conversion apparatus is used to electrically connect a power generation apparatus and the energy storage apparatus.

According to some embodiments of the present application, the energy storage system includes a plurality of energy storage apparatuses connected in parallel.

The technical solutions provided by the embodiments of the present disclosure have at least the following beneficial effects:
The present application provides an energy storage apparatus, which includes a first compartment and a battery apparatus. The first compartment includes a first top wall and a first side wall connected to each other. The first top wall is provided with a first exhaust mechanism, which can communicate the interior of the first compartment with the outside. The battery apparatus is accommodated in the first compartment. Since the first side wall mainly plays a role in supporting and load bearing in the first compartment, and the first exhaust mechanism, which communicates the interior of the first compartment with the outside, is arranged on the first top wall instead of the first side wall, the impact of the arrangement of the first exhaust mechanism on the structure of the first side wall is reduced, thereby reducing the impact of the arrangement of the first exhaust mechanism on the supporting effect and load-bearing capacity of the wall of the first compartment, facilitating an improvement in the stress condition of the energy storage apparatus and facilitating an improvement in the reliability of the energy storage apparatus.

### BRIEF DESCRIPTION OF THE DRAWINGS

By reading the following detailed description of the preferred embodiments, various other advantages and benefits will become clear to those with ordinary skill in the art. The drawings are used for the purpose of illustrating the preferred embodiments only and are not to be considered a limitation to the present application. Same components are denoted by same reference numerals throughout the drawings.
FIG. 1 is a schematic structural view of an energy storage apparatus according to some embodiments of the present application;
FIG. 2 is a schematic partial inner structural view of an energy storage apparatus according to some embodiments of the present application;
FIG. 3 is a schematic partial inner structural view of a first compartment in an energy storage apparatus according to some embodiments of the present application;
FIG. 4 is a schematic structural view of a second compartment in an energy storage apparatus according to some embodiments of the present application;
FIG. 5 is a schematic partial inner structural view of a second compartment in an energy storage apparatus according to some embodiments of the present application;
FIG. 6 is a schematic structural view of a third compartment in an energy storage apparatus according to some embodiments of the present application;
FIG. 7 is a partial structural perspective view of an energy storage apparatus according to some embodiments of the present application; and
FIG. 8 is a schematic partial inner structural view of a fourth compartment in an energy storage apparatus according to some embodiments of the present application.

In the drawings: 1. First compartment; 11. First top wall; 111. Drainage groove; 12. First side wall; 121. Second exhaust port; 122. Second sealing member; 13. First exhaust mechanism; 131. First exhaust port; 132. First sealing member; 133. Water-blocking structure; 1331. Baffle bar; 14. First bottom wall; 141. First gas vent; 15. Spray member; 2. Second compartment; 21. First air vent; 22. Second air vent; 23. Blocking member; 24. Second top wall; 25. Second side wall; 26. Radiator; 27. Fan; 28. Tank; 29. Power conversion apparatus; 3. Third compartment; 31. Third top wall; 32. Third exhaust mechanism; 4. Fourth compartment; 41. Fourth exhaust mechanism; 42. Fourth gas vent; 5. Thermal management pipeline; 101. Battery apparatus; 104. Electrical component.

### DETAILED DESCRIPTION

The embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

It should be noted that, unless otherwise specified, the technical or scientific terms used in the embodiments of the present application should have the usual meanings as understood by those skilled in the art to which the embodiments of the present application belong.

In the description of the embodiments of the present application, orientation or positional relationships indicated by the technical terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like are based on the orientation or positional relationships shown in the accompanying drawing, and are only intended for the convenience of describing the embodiments of the present application and simplifying the description, and do not indicate or imply that the apparatus or element referred to must have a specific orientation or be constructed and operated in a specific orientation, and therefore cannot be construed as a restriction on the embodiments of the present application.

In addition, the technical terms "first," "second," etc. are used for descriptive purposes only, and cannot be construed as indicating or implying a relative importance, or implicitly specifying the number of the indicated technical features. In the description of the embodiments of the present application, the meaning of "a plurality of" is two or more, unless otherwise explicitly and specifically defined.

In the description of the embodiments of the present application, unless otherwise explicitly specified and defined, the technical terms "mount," "couple," "connect," "fix", etc., should be understood in a broad sense, for example, a fixed connection, a detachable connection, or an integral connection; or a mechanical connection, or an electrical connection; or a direct connection, an indirect connection through an intermediate medium, an internal communication of two elements, or interaction between two elements. For those of ordinary skill in the art, the specific meanings of the above terms in the embodiments of the present application can be understood according to specific situations.

In the description of the embodiments of the present application, unless otherwise explicitly specified and defined, the expression a first feature being "on" or "under" a second feature may be a case that the first feature is in direct contact with the second feature, or the first feature is in indirect contact with the second feature via an intermediate medium. Furthermore, the expression the first feature being "over", "above" and "on top of" the second feature may be a case that the first feature is directly above or obliquely above the second feature, or only means that the level of the first feature is higher than that of the second feature. The expression the first feature being "below," "underneath" or "under" the second feature may be a case that the first feature is directly underneath or obliquely underneath the second feature, or only means that the level of the first feature is lower than that of the second feature.

At present, in view of the development of market situation, the application of battery apparatuses is becoming increasingly more extensive. Battery apparatuses are not only used in energy storage power systems such as hydraulic, thermal, wind and solar power stations, but also widely used in energy storage apparatuses such as energy storage containers or energy storage cabinets. As the application fields of battery apparatuses continue to expand, people's requirements for the reliability of battery apparatuses are also constantly increasing.

The battery apparatus mentioned in the embodiments of the present application may include one or more battery cell assemblies for providing voltage and capacity. The battery cell assembly may include a plurality of battery cells, and the plurality of battery cells are connected in series or in parallel or in a series-parallel mode through busbar components.

In some embodiments, a battery cell assembly is generally formed by arranging a plurality of battery cells.

As an example, the battery cell assembly can be a battery module, and the battery module is arranged by a plurality of battery cells and fixed to form an independent module. As an example, the battery module may be formed by binding a plurality of battery cells with a binding tape.

In some embodiments, the battery apparatus may include one or more battery packs, which may include one or more battery cell assemblies. As an example, a battery pack includes a box body and one or more battery cell assemblies, which are accommodated in the box body, for example, in a fixed manner. As another example, the battery apparatus includes a plurality of battery packs, which can be connected in series, in parallel, or in a mixed manner.

As an example, the box body may include a first box body and a second box body. The first box body and the second box body are fastened together to form an enclosure space inside the box body to accommodate the battery cell assembly. Enclosure here means covering or closing, and may be sealed or unsealed. The first box body may be a top cover or a bottom plate.

As an example, the box body may include a top cover, a frame, and a bottom plate. The top cover and the bottom plate are respectively connected to the frame, so that the enclosure space is formed in the box body to accommodate the battery cell assembly.

In some embodiments, the plurality of battery packs included in the battery apparatus may constitute one or more battery clusters, so that the energy storage apparatus provided in the embodiments of the present application includes one or more battery clusters to improve the voltage and capacity of the energy storage apparatus. The battery cluster may include a plurality of battery packs, and the plurality of battery packs are connected in series via bus components to increase the voltage of the energy storage apparatus. When the energy storage apparatus includes a plurality of battery clusters, the battery clusters can be connected in series, in parallel, or in a mixed manner.

Energy storage apparatuses can be used for an energy storage power station, a wind power generation system, a solar power generation system, a mobile power system or a temporary power supply system and the like. Energy storage apparatuses can store electric energy as needed and output it at the appropriate time. For example, energy storage apparatuses can store electric energy during low electricity consumption periods and provide electric energy to relevant users or electrical devices during peak electricity consumption periods. An energy storage system provided by the embodiments of the present application may be any power system that needs the energy storage apparatus.

In some embodiments, the energy storage apparatus is an energy storage container or an energy storage cabinet.

In some embodiments, the energy storage apparatus may include a cabinet body and one or more battery clusters accommodated in the cabinet body.

In some embodiments, the energy storage apparatus may include modules such as a thermal management module, a master control module, a general control module, a power distribution module, and a fire protection module.

As an example, the thermal management module may include a liquid cooling unit that provides cooling liquid for regulating the temperature of the battery cells to battery apparatuses through pipelines.

As an example, the master control module can be used as a battery management unit for the battery cluster to monitor and manage the battery cluster. The master control module can monitor information such as the current, voltage, power, or temperature of the battery cluster. For example, it can control the charging and discharging current and voltage of the battery cluster. The master control module includes the slave battery management unit (SBMU), fusion switch and other modules.

As an example, the general control module can be used as a battery management unit for the energy storage apparatus to monitor and manage the energy storage apparatus. The general control module can monitor the current, voltage, power, state of charge or temperature or other information of the energy storage apparatus. For example, it can control the charging and discharging current and voltage of the energy storage apparatus. As an example, the general control module includes an insulation monitoring module (IMM), a master battery management unit (MBMU), Ethernet (ETH) and a fiber optic conversion module or other modules.

As an example, the fire protection system includes a control panel, detectors, alarm apparatuses, etc., which are used to conduct detection, give alarms, or extinguish fire in the energy storage system.

As an example, the power distribution apparatus can be used to distribute power to the power consumption modules of the energy storage apparatus.

Currently, exhaust ports or other exhaust mechanisms are typically formed on side walls of the energy storage apparatuses, and the arrangement of such exhaust mechanisms often disrupt the original side wall structure. Since the load in an energy storage apparatus is mainly transmitted downwards to the ground through the side walls, forming exhaust mechanisms in the side walls will weaken the supporting effect and load-bearing capacity of the side walls, thereby reducing the reliability of the energy storage apparatus.

To improve the reliability of the energy storage apparatus, some embodiments of the present application provide an energy storage apparatus, which includes a first compartment and a battery apparatus. The first compartment includes a first top wall and a first side wall connected to each other. The first top wall is provided with a first exhaust mechanism, which can communicate the interior of the first compartment with the outside. The battery apparatus is accommodated in the first compartment. Since the first side wall mainly plays a role in supporting and load bearing in the first compartment, and the first exhaust mechanism, which communicates the interior of the first compartment with the outside, is arranged on the first top wall instead of the first side wall, the impact of the arrangement of the first exhaust mechanism on the structure of the first side wall is reduced, thereby reducing the impact of the arrangement of the first exhaust mechanism on the supporting effect and load-bearing capacity of the wall of the first compartment, facilitating an improvement in the stress condition of the energy storage apparatus and facilitating an improvement in the reliability of the energy storage apparatus.

The energy storage apparatus described in the embodiments of the present application can be an energy storage container or an energy storage cabinet, and the energy storage apparatus described in the embodiments of the present application can be applied to an energy storage system. The energy storage system can include one or more energy storage apparatuses and a power conversion system (PCS). The power conversion system is used to connect between the power generation device and the energy storage apparatus. The power generation device is used to generate electric energy, and the electric energy generated by the power generation device can be stored in the energy storage apparatus through the power conversion system. As an example, the power generation device can be particularly a solar panel, a hydroelectric power generation device, a thermal power generation device, a wind power generation device and the like.

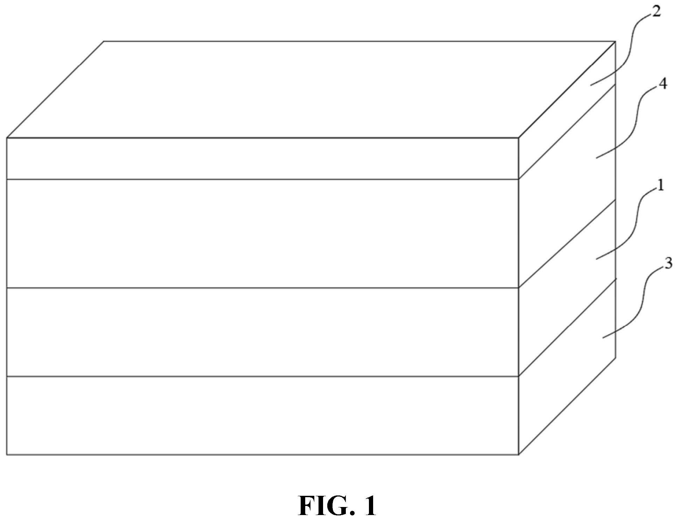

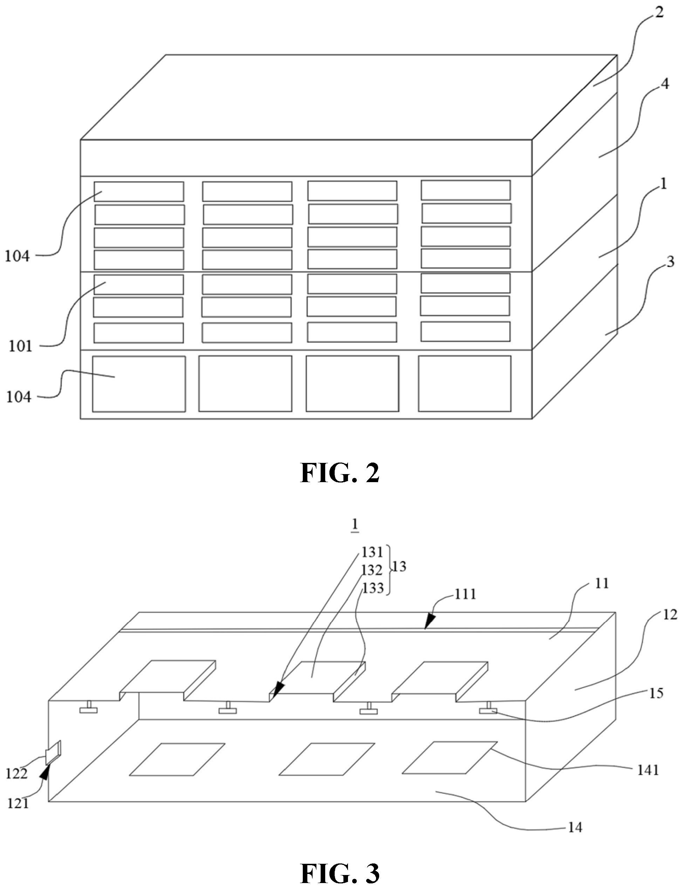

Some embodiments of the present application provide an energy storage apparatus as shown in FIG. 1, which, with reference to FIG. 2, includes a first compartment 1 and a battery apparatus 101. With reference to FIG. 3, the first compartment 1 includes a first top wall 11 and a first side wall 12 connected to each other. The first top wall 11 is provided with a first exhaust mechanism 13, which can communicate the interior of the first compartment 1 with the outside. The first compartment 1 accommodates the battery apparatus 101.

The first compartment 1 can be a compartment structure in the energy storage apparatus that can form a hollow structure, wherein the hollow structure can serve as an accommodation space for accommodating the battery apparatus 101 in the energy storage apparatus, and the battery apparatus 101 can be protected by the first compartment 1.

By way of example, the first compartment 1 may accommodate the battery apparatuses 101 in a manner where the first compartment 1 and other compartments are used together to accommodate the battery apparatuses 101, with some battery apparatuses 101 in the energy storage apparatus accommodated in the first compartment 1 and other battery apparatuses 101 accommodated in other compartments.

The first top wall 11 and the first side wall 12 can be wall structures in the first compartment 1, which are used to enclose the accommodation space. Other devices such as the battery apparatus 101 in the energy storage apparatus can be connected to the first top wall 11 or the first side wall 12, so that the load of these devices can be transferred to the ground or the bearing platform through the first side wall 12. By way of example, a connecting harness for the battery apparatus 101 can also be provided in the first compartment 1.

The first top wall 11 can be a wall structure located on the top side of the first compartment 1, which can be arranged to extend horizontally or to extend at an angle of less than 90° to the horizontal. The first side wall 12 can enclose to form a hollow structure with openings at both ends, and the first top wall 11 is connected to the top end of the hollow structure.

The first exhaust mechanism 13 may be a mechanism that can communicate the internal accommodation space of the first compartment 1 with the outside. The term outside refers to the outside relative to the internal accommodation space of the first compartment 1. The outside can be the external environment outside the energy storage apparatus, or other compartments in the energy storage apparatus other than the first compartment 1.

The battery cell assembly in the battery apparatus 101 generates heat during operation. As the temperature rises, there is possibility of thermal runaway, which may occur due to the generation of smoke, high-temperature gas, and flammable and explosive gas, and other substances. Since the first exhaust mechanism 13 can connect the interior of the first compartment 1 with the outside, the smoke, high-temperature gas, flammable and explosive gas and other substances inside the first compartment 1 can be discharged to the outside of the first compartment 1 through the first exhaust mechanism 13, which can reduce the possibility of fire inside the first compartment 1.

By way of example, a plurality of battery apparatuses 101 may be arranged in the first compartment 1, and the plurality of battery apparatuses 101 can be connected in series by busbar components to form a battery cluster.

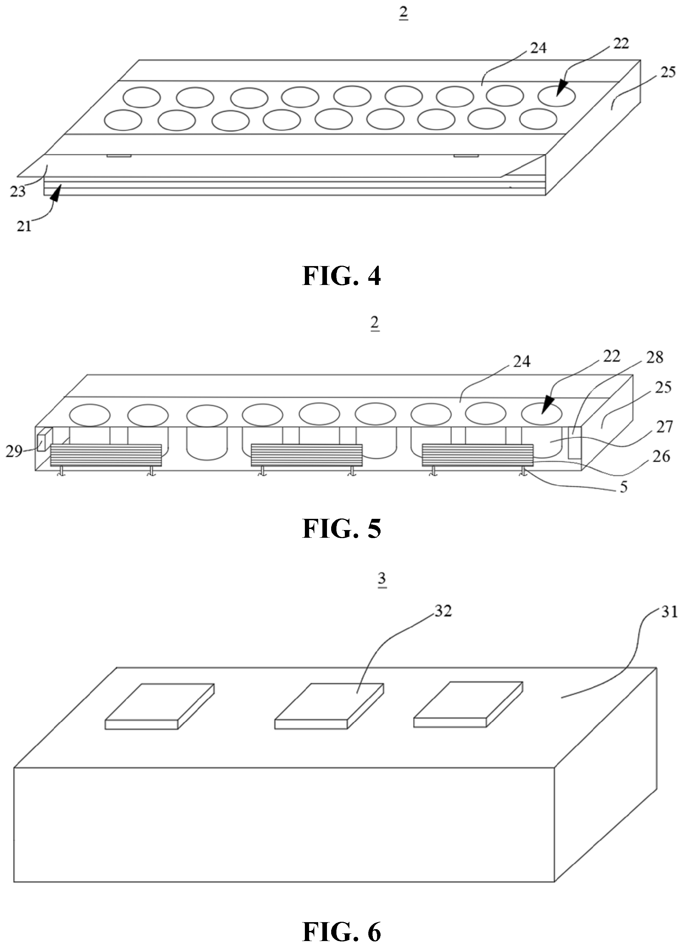

In some embodiments, the energy storage apparatus further includes a second compartment 2 and a heat exchange assembly. The second compartment 2 is used to accommodate the heat exchange assembly and is connected to the upper side of the first compartment 1. The first compartment 1 can communicate with the second compartment 2 through the first exhaust mechanism 13. With reference to FIG. 4, the second compartment 2 is provided with a first air vent 21 and a second air vent 22. With reference to FIG. 5, the heat exchange assembly includes a radiator and a fan. The radiator is arranged in the second compartment 2. The air inlet of the fan communicates with the second compartment 2, and the air outlet of the fan communicates with the second air vent 22.

The second compartment 2 can be a compartment structure in the energy storage apparatus that can form a hollow structure, wherein the hollow structure can serve as an accommodation space for accommodating at least some of the components in the heat exchange assembly, and these components can be protected by the second compartment 2. The second compartment 2 is connected to the upper side of the first compartment 1. This can mean that the second compartment 2 is located on the upper side of the first compartment 1 and connected to the first compartment 1, so that the energy storage apparatus composed of the first compartment 1 and the second compartment 2 presents an integral structure. By way of example, the second compartment 2 can be connected to the first compartment 1 by means of connectors such as rivets, bolts, or connecting pins, or can be connected to the first compartment 1 by means of welding or bonding, and the like. In some embodiments, the connection between the second compartment 2 and the first compartment 1 can be a detachable connection, enabling the energy storage apparatus to be modularly assembled and disassembled.

By way of example, when the second compartment 2 is connected to the upper side of the first compartment 1, the first top wall 11 of the first compartment 1 can serve as the bottom wall of the second compartment 2, and serve to bear and install components such as the heat exchange assembly arranged in the second compartment 2. In other words, when the second compartment 2 is connected to the upper side of the first compartment 1, the heat exchange assembly and other components in the second compartment 2 can be connected to the upper surface of the first top wall 11.

The first compartment 1 can communicate with the second compartment 2 through the first exhaust mechanism 13, so that the smoke, high-temperature gas, flammable and explosive gas and other substances inside the first compartment 1 can be discharged to the second compartment 2 through the first exhaust mechanism 13, which can reduce the concentration of the smoke, high-temperature gas, flammable and explosive gas and other substances inside the first compartment 1.

The second air vent 22 can be a window formed on the second compartment 2 for air outlet, which can communicate the interior of the second compartment 2 with the outside. The first air vent 21 can be a window opened on the second compartment 2 for air inlet, which can communicate the interior of the second compartment 2 with the outside. When the smoke, high-temperature gas, flammable and explosive gas, and other substances inside the first compartment 1 enter the second compartment 2, they can be directly discharged to the outside through the second air vent 22, or they can be mixed with the fresh air entering through the first air vent 21 and then discharged to the outside through the second air vent 22.

The heat exchange assembly can be an assembly used for thermal management of the battery apparatus 101. It can be used to heat the battery apparatus 101 or cool the battery apparatus 101, so that the battery apparatus 101 is in a suitable temperature environment, which allows the battery apparatus 101 to be in good working condition.

The radiator can be a heat exchanger arranged in the second compartment 2, which serves as a device in the heat exchange assembly for exchanging heat with the outside. The heat absorbed by the heat exchange medium in the heat exchange assembly from the battery apparatus 101 can be dissipated to the external environment through the radiator. Outside air entering the second compartment 2 through the first air vent 21 can be discharged to the outside through the second air vent 22 after exchanging heat with the radiator.

The fan can be a device used to accelerate airflow. The air outlet of the fan communicates with the second air vent 22 to accelerate the speed at which air in the second compartment 2 is discharged outward. When the radiator is exchanging heat with the external environment, the fan can increase the air flow rate around the radiator by accelerating the speed at which air is discharged from the second compartment 2, thereby improving the heat exchange effect of the radiator. When smoke, high-temperature gas, flammable and explosive gas and other substances inside the first compartment 1 are discharged to the second compartment 2 through the first exhaust mechanism 13, the fan can accelerate the speed at which air is discharged from the second compartment 2, thereby quickly expelling the smoke, high-temperature gas, flammable and explosive gas and other substances to the outside, which can reduce the possibility of fire inside the energy storage apparatus.

By way of example, the fan can be located inside the second compartment 2 or outside the second compartment 2.

In some embodiments, the energy storage apparatus further includes a thermal management pipeline communicating the battery apparatus 101 with the radiator.

The battery apparatus 101 is provided with a second heat exchanger that exchanges heat with the internal battery cells. The thermal management pipeline can be used to communicate the radiator with the second heat exchanger, allowing the heat exchange medium to circulate between the radiator and the second heat exchanger.

By way of example, the thermal management pipeline in communication with the radiator may extend vertically through the first top wall 11 into the first compartment 1, communicating the radiator with the battery apparatus 101, so that the thermal management pipeline is protected by the first compartment 1 and the second compartment 2, and the thermal management pipeline is not likely to be damaged by impact. Alternatively, the thermal management pipeline in communication with the radiator may extend through the second side wall 25 to the outside of the second compartment 2, and after reaching a preset position, extend through the first side wall 12 into the first compartment 1 to communicate the radiator with the battery apparatus 101, making the disassembly and maintenance of the thermal management pipeline convenient, which can improve the convenience of disassembly and maintenance of the energy storage apparatus.

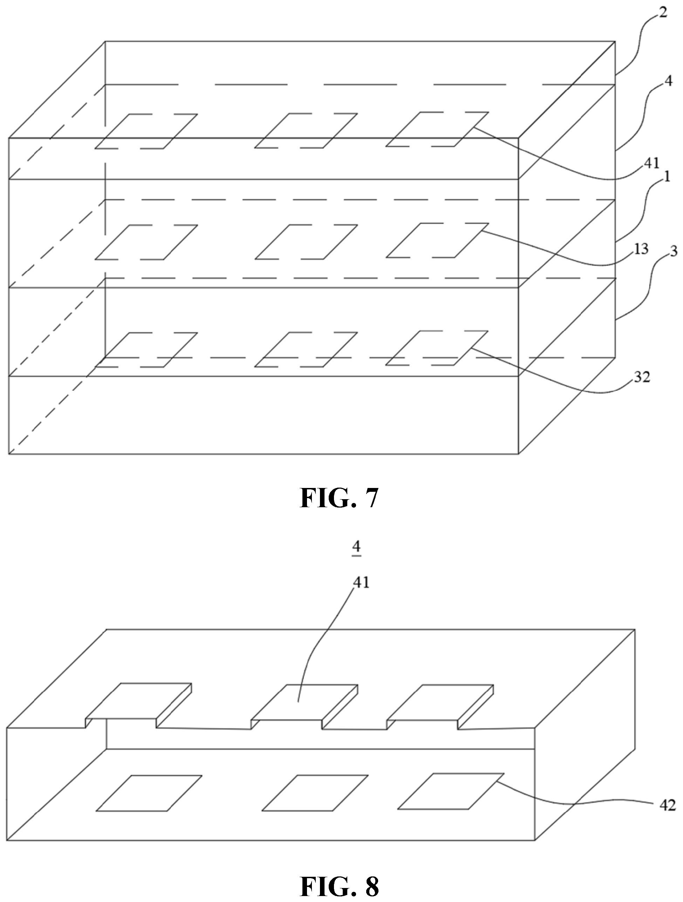

In some embodiments, the energy storage apparatus further includes a third compartment 3, which accommodates the battery apparatus 101. The third compartment 3 is connected to the lower side of the first compartment 1. The third compartment 3 includes a third top wall 31. With reference to FIGS. 6 and 7, the third top wall 31 is provided with a third exhaust mechanism 32, which can communicate the interior of the third compartment 3 with the interior of the first compartment 1.

The third compartment 3 can be a compartment structure in the energy storage apparatus that can form a hollow structure, wherein the hollow structure can serve as an accommodation space for accommodating the battery apparatus 101 in the energy storage apparatus, and the battery apparatus 101 can be protected by the third compartment 3.

The third compartment 3 is connected to the lower side of the first compartment 1. This means that the third compartment 3 may be located on the lower side of the first compartment 1 and connected to the first compartment 1. The connection between the third compartment 3 and the first compartment 1 can be the same as the connection between the second compartment 2 and the first compartment 1, or it can be different from the connection between the second compartment 2 and the first compartment 1.

In some embodiments, the third compartment 3, which is connected to the lower side of the first compartment 1, may be arranged on the ground or on a bearing platform. By way of example, the third compartment 3 can be connected to the first compartment 1 by means of connectors such as rivets, bolts, or connecting pins, or can be connected to the first compartment 1 by means of welding or bonding, and the like. In some embodiments, the connection between the third compartment 3 and the first compartment 1 can be a detachable connection, enabling the energy storage apparatus to be modularly assembled and disassembled. By way of example, the third compartment 3 can be connected to the ground or a bearing platform by means of rivets, bolts or other connectors, or by means of adhesive bonding, and the like. In some embodiments, the connection between the third compartment 3 and the ground or the bearing platform can be a detachable connection, allowing the energy storage apparatus to be easily assembled and disassembled.

The third top wall 31 can be a wall structure located on the top side of the third compartment 3, which can be arranged to extend horizontally or to extend at an angle of less than 90° to the horizontal. In some embodiments, the third compartment 3 further includes a third side wall, which can enclose to form a hollow structure with openings at both ends, and the third top wall 31 is connected to the top end of the hollow structure.

The third exhaust mechanism 32 may be a mechanism that can communicate the internal accommodation space of the third compartment 3 with the outside. The term outside refers to the outside relative to the internal accommodation space of the third compartment 3. The outside can be the external environment outside the energy storage apparatus, or other compartments in the energy storage apparatus other than the third compartment 3.

By providing the third exhaust mechanism 32 on the third top wall 31, the third exhaust mechanism 32 can communicate the interior of the third compartment 3 with the interior of the first compartment 1, allowing smoke, high-temperature gas, flammable and explosive gas, and other substances inside the third compartment 3 to be discharged to the first compartment 1 through the third exhaust mechanism 32. This reduces the concentration of the smoke, high-temperature gas, flammable and explosive gas, and other substances inside the third compartment 3, thereby reducing the possibility of fire inside the third compartment 3.

In some embodiments, the first compartment 1 further includes a first bottom wall 14 opposite to the first top wall 11. The first bottom wall 14 is connected to the first side wall 12. The first bottom wall 14 is provided with a first gas vent 141. In the vertical direction, the first gas vent 141 overlaps at least partially with the third exhaust mechanism 32.

The first bottom wall 14 may be a wall structure in the first compartment 1 that is opposite to and spaced apart from the first top wall 11, and it is connected to the bottom end of the hollow structure enclosed by the first side wall 12.

The first gas vent 141 may be a window formed on the first bottom wall 14, which is used to allow smoke, high-temperature gas, and flammable and explosive gas, and other substances discharged by the third exhaust mechanism 32 to enter the first compartment 1. By having the first gas vent 141 overlapping at least partially with the third exhaust mechanism 32 vertically, when the third compartment 3 is arranged on the lower side of the first compartment 1, the third exhaust mechanism 32 can communicate with the first gas vent 141 vertically, allowing smoke, high-temperature gas, and flammable and explosive gas, and other substances discharged from the third compartment 3 through the third exhaust mechanism 32 to enter the first compartment 1 through the first gas vent 141.

In some embodiments, in the vertical direction, the projection of the third exhaust mechanism 32 is located within the projection range of the first gas vent 141.

The projection of the third exhaust mechanism 32 in the vertical direction is located within the projection range of the first gas vent 141 in the vertical direction, allowing the third exhaust mechanism 32 to be inserted into the first compartment 1 through the first gas vent 141 when the third compartment 3 is connected to the lower side of the first compartment 1. This not only improves the smoothness of exhaust by the third exhaust mechanism 32, but also reduces the possibility of interference when the third compartment 3 is connected to the lower side of the first compartment 1.

In some embodiments, at least two first compartments 1 are provided, and the third compartment 3 is located at the lower side of the at least two first compartments 1; in the vertical direction, the first exhaust mechanism 13 of the lower first compartment 1 of two adjacent first compartments 1 at least partially overlaps with the first gas vent 141 of the upper first compartment 1.

At least two first compartments 1 are provided. This may mean that the at least two first compartments 1 are arranged in the vertical direction. The third compartment 3 is located at the lower side of the at least two first compartments 1. This can mean that the at least two first compartments 1 form an assembly of first compartments 1, and the third compartment 3 is located at the lower side of the assembly of first compartments 1, so that the third compartment 3 can be arranged on the ground or on a bearing platform.

By having the first exhaust mechanism 13 of the lower first compartment 1 of two adjacent first compartments 1 at least partially overlapping with the first gas vent 141 of the upper first compartment 1 in the vertical direction, the smoke, high-temperature gas, flammable and explosive gas and other substances discharged from the lower first compartment 1 of the two adjacent first compartments 1 through the first exhaust mechanism 13 can enter the upper first compartment 1 through the first gas vent 141.

In some other embodiments, the first compartment 1 does not have a first bottom wall 14, and the first top wall 11 and the first side wall 12 enclose an accommodation space with an opening at one end. When there are at least two first compartments 1 arranged vertically, the opening of the upper first compartment 1 is placed over the first top wall 11 of the lower first compartment 1. The first top wall 11 of the lower first compartment 1 serves as the bottom wall of the upper first compartment 1, and serves to bear and install components such as the battery apparatus 101 arranged in the first compartment 1.

In some embodiments, in the vertical direction, the projection of the first exhaust mechanism 13 of the lower first compartment 1 of two adjacent first compartments 1 is located within the projection range of the first gas vent 141 of the upper first compartment 1.

By ensuring that the projection of the first exhaust mechanism 13 of the lower first compartment 1 of two adjacent first compartments 1 in the vertical direction is located within the projection range of the first gas vent 141 of the upper first compartment 1 in the vertical direction, the smoothness of exhaust from the first compartment 1 to the adjacent first compartment 1 through the first exhaust mechanism 13 can be improved.

In some embodiments, the first exhaust mechanism 13 of the lower first compartment 1 of two adjacent first compartments 1 extends at least partially into the upper first compartment 1 through the first gas vent 141.

The first exhaust mechanism 13 of the lower first compartment 1 of two adjacent first compartments 1 extends at least partially into the upper first compartment 1 through the first gas vent 141. This not only reduces the possibility of interference when one first compartment 1 is stacked on top of another first compartment 1, but also improves the smoothness of exhaust into the first compartment 1 through the first exhaust mechanism 13.

In some embodiments, the second compartment 2 is provided with a blocking member 23. The blocking member 23 is used to open and close the first air vent 21.

The blocking member 23 can be a device used to block the air intake of the first air vent 21, which can realize the opening or closing of the first air vent 21. The second compartment 2 is provided with a blocking member 23, and the blocking member 23 is used to open or close the first air vent 21, so that when the first exhaust mechanism 13 communicates the first compartment 1 with the second compartment 2, the blocking member 23 closes the first air vent 21, allowing smoke, high-temperature gas, flammable and explosive gas, and other substances entering the second compartment 2 from the first compartment 1 to be better discharged to the outside through the second air vent 22 under the action of the fan; and when the first exhaust mechanism 13 does not communicate the first compartment 1 with the second compartment 2, the blocking member 23 opens the first air vent 21, allowing fresh air from the outside to enter the second compartment 2 through the first air vent 21 under the action of the fan, and dissipating the heat emitted by the radiator to the outside through the second air vent 22.

In some embodiments, in the vertical direction, the projection of the first air vent 21 is separate from the projection of the first exhaust mechanism 13.

By setting the projection of the first air vent 21 in the vertical direction separate from the projection of the first exhaust mechanism 13 in the vertical direction, rainwater from the outside is less likely to fall onto the first exhaust mechanism 13 when it enters the second compartment 2 through the first air vent 21, which can reduce the possibility of rainwater entering the first compartment 1 through the first exhaust mechanism 13.

In some embodiments, in the vertical direction, the projection of the second air vent 22 is separate from the projection of the first exhaust mechanism 13.

By setting the projection of the second air vent 22 in the vertical direction separate from the projection of the first exhaust mechanism 13 in the vertical direction, rainwater from the outside is less likely to fall onto the first exhaust mechanism 13 when it enters the second compartment 2 through the second air vent 22, which can reduce the possibility of rainwater entering the first compartment 1 through the first exhaust mechanism 13.

In some embodiments, the first air vent 21 and the second air vent 22 are respectively arranged on two sides of the radiator.

The first air vent 21 and the second air vent 22 are respectively arranged on two sides of the radiator, so that the fresh air from the outside entering the second compartment 2 through the first air vent 21 will be discharged through the second air vent 22 after flowing through the radiator, which can improve the heat exchange effect of the radiator.

In some embodiments, the second compartment 2 includes a second top wall 24 and a second side wall 25 connected to each other, a second air vent 22 is formed in the second top wall 24 and/or the second side wall 25, and a fan is arranged in the second compartment 2 and at the second air vent 22.

The second top wall 24 and the second side wall 25 can be wall structures in the second compartment 2, which are used to enclose an accommodation space for accommodating the heat exchange assembly. Other devices such as the heat exchange assembly can be connected to the second top wall 24 and the second side wall 25. The loads of these devices can be transferred to the first side wall 12 through the second side wall 25, and then to the ground or the bearing platform. The second top wall 24 can be a wall structure located on the top side of the second compartment 2, which can be arranged to extend horizontally or to extend at an angle of less than 90° to the horizontal. The second side wall 25 can enclose to form a hollow structure with openings at both ends, and the second top wall 24 is connected to the top end of the hollow structure.

By forming the second air vent 22 on the second top wall 24 and/or the second side wall 25, the gas inside the second compartment 2 can be discharged to the outside through the second air vent 22. The second air vent 22 is formed on the second top wall 24 and/or the second side wall 25. This may mean that the second air vent 22 is formed on the second top wall 24, or the second air vent 22 is formed on the second side wall 25, or the second air vent 22 is formed on both the second top wall 24 and the second side wall 25.

The fan is arranged inside the second compartment 2, and the air outlet of the fan communicates with the second air vent 22, so that the fan can smoothly discharge the gas in the second compartment 2 to the outside through the second air vent 22. The fan is arranged at the second air vent 22. This may mean that the fan is connected to the wall where the second air vent 22 is located and the central axis of the outlet of the fan coincides with the central axis of the second air vent 22, so that the gas in the second compartment 2 can be smoothly discharged under the action of the fan.

In some embodiments, the second compartment 2 includes a second top wall 24 and a second side wall 25 connected to each other, a second air vent 22 is formed in the second top wall 24 and/or the second side wall 25, and a fan is arranged at the second air vent 22 and extends at least partially out of the second compartment 2.

The second air vent 22 is formed on the second top wall 24 and/or the second side wall 25. This may mean that the second air vent 22 is formed on the second top wall 24, or the second air vent 22 is formed on the second side wall 25, or the second air vent 22 is formed on both the second top wall 24 and the second side wall 25.

The fan extends at least partially out of the second compartment 2 and is arranged at the second air vent 22. This may mean the fan is connected to the wall where the second air vent 22 is located, and the portion of the fan including the outlet extends out of the second compartment 2 through the second air vent 22, and the portion of the fan including the inlet is located inside the second compartment 2, and the central axis of the inlet of the fan coincides with the central axis of the second air vent 22, allowing the fan to smoothly discharge the gas in the second compartment 2 to the outside of the second compartment 2; alternatively, the inlet of the fan is connected to the outer wall face of the wall where the second air vent 22 is located, the fan is located outside the second compartment 2, and the central axis of the inlet of the fan coincides with the central axis of the second air vent 22, allowing the fan to smoothly discharge the gas in the second compartment 2 to the outside of the second compartment 2.

In some embodiments, the first air vent 21 and the second air vent 22 are both arranged on the second side wall 25, and the first air vent 21 and the second air vent 22 are respectively arranged opposite to each other on two sides of the radiator.

The first air vent 21 and the second air vent 22 are both arranged on the second side wall 25 and the first air vent 21 and the second air vent 22 are respectively arranged opposite to each other on two sides of the radiator. This not only reduces the possibility of rainwater from the outside entering the second compartment 2 from the first top wall 11, but also ensures that fresh air from the outside entering the second compartment 2 through the first air vent 21 will be discharged through the second air vent 22 after flowing through the radiator, which can improve the heat exchange effect of the radiator.

In some embodiments, the energy storage apparatus further includes an electrical component 104 and a fourth compartment 4, wherein the electrical component 104 is arranged in the fourth compartment 4 and electrically connected to the battery apparatus 101.

The fourth compartment 4 can be a compartment structure in the energy storage apparatus that can form a hollow structure, wherein the hollow structure can serve as an accommodation space for accommodating the electrical components 104, which can be protected by the fourth compartment 4. By way of example, the electrical components 104 may include an energy storage converter, a battery management system, an electronic control switch, a fire protection controller, and other electrical components that are electrically connected to the battery apparatus 101, enabling the energy storage apparatus to operate normally.

In some embodiments, the fourth compartment 4 is arranged between the first compartment 1 and the second compartment 2 in a vertical direction.

The fourth compartment 4 is arranged between the first compartment 1 and the second compartment 2, so that the fourth compartment 4 is relatively close to the first compartment 1, so that smoke, high-temperature gas, flammable and explosive gas, and other substances in the fourth compartment 4 can more easily enter the first compartment 1 and be discharged into the outside air.

By way of example, with reference to FIG. 8, the fourth compartment 4 is provided with a fourth exhaust mechanism 41 that can communicate the interior of the fourth compartment 4 with the second compartment 2, and the fourth compartment 4 is provided with a fourth gas vent 42 that can communicate the interior of the fourth compartment 4 with the first compartment 1, so that the smoke, high-temperature gas, flammable and explosive gas and other substances inside the first compartment 1 can be discharged to the outside through the fourth compartment 4 and the second compartment 2 in sequence.

By way of example, the first exhaust mechanism 13, the second exhaust mechanism, the third exhaust mechanism 32 and the fourth exhaust mechanism 41 can have the same structure.

In some embodiments, the energy storage apparatus further includes a fire protection assembly, which includes a tank and a spray member in communication with each other. The tank is arranged in the second compartment 2, and the spray member is arranged in the first compartment 1.

The fire protection assembly can be an assembly of the energy storage apparatus used for fire protection and extinguishing. The tank can be a container that stores a fire extinguishing medium, and the spray member can be a device used to spray the fire extinguishing medium. By arranging the tank in the second compartment 2, the internal space occupied by the fire protection assembly in the first compartment 1 can be reduced and the energy density of the first compartment 1 can be improved. The tank and the spray member communicate with each other through pipelines, and the spray member is arranged in the first compartment 1 so that the fire extinguishing medium in the tank can be sprayed onto the electrical apparatus through the spray member.

In some embodiments, the energy storage apparatus further includes a power conversion apparatus arranged in the second compartment 2 and electrically connected to the battery apparatus 101.

By arranging the power conversion apparatus electrically connected to the battery apparatus 101 in the second compartment 2, the internal space occupied in the first compartment 1 can be reduced and the energy density of the first compartment 1 can be improved.

In some embodiments, a second exhaust port 121 is formed on the first side wall 12. The second exhaust port 121 can communicate the interior of the first compartment 1 with the outside. The second exhaust port 121 is covered with a second sealing member 122, which can be switched between a first state and a second state. In the first state, the second sealing member 122 closes the second exhaust port 121. In the second state, the second sealing member 122 opens the second exhaust port 121.

The second exhaust port 121 may be a window formed on the first side wall 12, which is used for communicating the interior of the first compartment 1 with the outside. By forming a second exhaust port 121 on the first side wall 12, the smoke, high-temperature gas, flammable and explosive gas and other substances inside the first compartment 1 can also be discharged to the outside through the second exhaust port 121, which can improve the ability of the first compartment 1 to discharge the smoke, high-temperature gas, flammable and explosive gas and other substances.

The second sealing member 122 may be a device for closing or opening the second exhaust port 121. The second sealing member 122 can be switched between a first state and a second state. In the first state, the second sealing member 122 closes the second exhaust port 121. In the second state, the second sealing member 122 opens the second exhaust port 121.

By way of example, the second sealing member 122 can rupture when the temperature, pressure, smoke concentration and other parameters in the first compartment 1 reach a preset threshold. The ruptured second sealing member 122 is in the second state and opens the second exhaust port 121; and the unruptured second sealing member 122 is in the first state and closes the second exhaust port 121.

By way of example, the second sealing member 122 can be active when the temperature, pressure, smoke concentration and other parameters in the first compartment 1 reach a preset threshold. The active second sealing member 122 is in the second state and opens the second exhaust port 121; and the inactive second sealing member 122 is in the first state and closes the second exhaust port 121. In some embodiments, the action of the second sealing member 122 may be that the second sealing member 122 slides off the covering of the second exhaust port 121, or the second sealing member 122 rotates off the covering of the second exhaust port 121.

By way of example, the second sealing member 122 can be a waterproof and breathable structure. For instance, the second sealing member 122 can be a porous fiberboard, a polymer plastic board, a metal mesh board, or other composite structure board.

In some embodiments, the energy storage apparatus further includes a power conversion apparatus arranged in the first compartment 1 and electrically connected to the battery apparatus 101.

By arranging the power conversion apparatus electrically connected to the battery apparatus 101 in the first compartment 1, the power conversion apparatus can be transferred together with the battery apparatus 101 in the first compartment 1, which facilitates the installation of the power conversion apparatus in the energy storage apparatus.

In some embodiments, the first exhaust mechanism 13 includes a first exhaust port 131 formed in the first top wall 11 and a first sealing member 132 covering the first exhaust port 131. The first sealing member 132 can be switched between a first state and a second state. In the first state, the first sealing member 132 closes the first exhaust port 131, and in the second state, the first sealing member 132 opens the first exhaust port 131.

The first exhaust port 131 may be a window formed on the first top wall 11, which is used for communicating the interior of the first compartment 1 with the outside. By forming the first exhaust port 131 on the first top wall 11, the smoke, high-temperature gas, flammable and explosive gas and other substances inside the first compartment 1 can be discharged to the outside through the first exhaust port 131, so that the smoke, high-temperature gas, flammable and explosive gas and other substances in the first compartment 1 can be smoothly discharged to the outside or other compartments.

The first sealing member 132 may be a device for closing or opening the first exhaust port 131. The first sealing member 132 can be switched between a first state and a second state. In the first state, the first sealing member 132 closes the first exhaust port 131. In the second state, the first sealing member 132 opens the first exhaust port 131.

By way of example, the first sealing member 132 can rupture when the temperature, pressure, smoke concentration and other parameters in the first compartment 1 reach a preset threshold. The ruptured first sealing member 132 is in the second state and opens the second exhaust port 121; and the unruptured first sealing member 132 is in the first state and closes the second exhaust port 121.

By way of example, the first sealing member 132 can be active when the temperature, pressure, smoke concentration and other parameters in the first compartment 1 reach a preset threshold. The active first sealing member 132 is in the second state and opens the second exhaust port 121; and the inactive first sealing member 132 is in the first state and closes the first exhaust port 131. In some embodiments, the action of the first sealing member 132 may be that the first sealing member 132 slides off the covering of the first exhaust port 131, or the first sealing member 132 rotates off the covering of the first exhaust port 131.

By way of example, the first sealing member 132 can be a waterproof and breathable structure. For instance, the first sealing member 132 can be a porous fiberboard, a polymer plastic board, a metal mesh board, or other composite structure board.

In some embodiments, the first exhaust mechanism 13 further includes a water-blocking structure 133. The water-blocking structure 133 is connected to the first top wall 11 and is at least partially located on the upper side of the first top wall 11, and the water-blocking structure 133 surrounds the outer side of the first exhaust port 131.

The water-blocking structure 133 can be used to block accumulated water on the first top wall 11 and reduce the amount of accumulated water entering the first exhaust port 131.

The water-blocking structure 133 is connected to the first top wall 11 and is at least partially located on the upper side of the first top wall 11. This can mean that the water-blocking structure 133 is connected to the upper side face of the first top wall 11, or it can mean that the water-blocking structure 133 is connected to the first top wall 11 and extends at least partially from the upper side face of the first top wall 11. By having the water-blocking structure 133 connected to the upper side face of the first top wall 11 and surrounding the first exhaust port 131, the accumulated water on the upper side face of the first top wall 11 is less likely to flow into the first exhaust port 131, thereby reducing the impact of the accumulated water on the first compartment 1 and improving the reliability of the energy storage apparatus.

By way of example, the water-blocking structure 133 can be connected to the upper side face of the first top wall 11 by means of bolts, rivets, connecting pins or other connecting parts; it can alternatively be connected to the upper side face of the first top wall 11 by means of welding, gluing or other methods, so as to be firmly connected to the first top wall 11, thereby reducing the possibility of gaps between the water-blocking structure 133 and the first top wall 11, reducing the possibility of water seepage, and improving the water blocking capacity of the water-blocking structure 133.

In some embodiments, the water-blocking structure 133 includes a baffle bar 1331, which is connected to the first top wall 11 and wound around the first exhaust port 131.

The baffle bar 1331 may be a part of the water-blocking structure 133, which protrudes vertically from the first top wall 11. By including the baffle bar 1331 in the water-blocking structure 133, materials used in the water-blocking structure 133 can be saved and the cost of the water-blocking structure 133 can be reduced.

By way of example, the water-blocking structure 133 may also include a sleeve, the end opening of which is connected to the upper side face of the first top wall 11, and the sleeve is fitted around the outer periphery of the first exhaust port 131.

In some embodiments, a plurality of baffle bars 1331 are provided, and the plurality of baffle bars 1331 are connected in sequence and wound around the first exhaust port 131.

By providing a plurality of baffle bars 1331, which are sequentially connected and wound around the first exhaust port 131, the plurality of baffle bars 1331 can be connected to form a water-blocking structure 133 surrounding the first exhaust port 131, reducing the possibility of accumulated water outside the first exhaust port 131 entering the first exhaust port 131.

In some embodiments, the baffle bar 1331 can be a rectangular bar, and a plurality of rectangular bars are connected end to end in sequence to form a polygon and are wound around the first exhaust port 131 to form the water-blocking structure 133.

In some embodiments, the baffle bar 1331 can be an arc-shaped bar, and a plurality of arc-shaped bars are connected end to end in sequence to form a ring shape and are wound around the first exhaust port 131 to form the water-blocking structure 133.

In some embodiments, two adjacent baffle bars 1331 are glued or welded.

Two adjacent baffle bars 1331 of the plurality of baffle bars 1331 are connected by gluing or welding, which reduces the possibility of gaps between the two adjacent baffle bars 1331, reduces the possibility of water seepage, and improves the water blocking capacity of the water-blocking structure 133 formed by the baffle bars 1331.

In some embodiments, the water-blocking structure 133 and the first top wall 11 are of an integrally formed structure.

The water-blocking structure 133 and the first top wall 11 are of an integrally formed structure, which means that the water-blocking structure 133 and the first top wall 11 are manufactured by integral forming processing methods such as stamping, so that the water-blocking structure 133 can be manufactured synchronously with the first top wall 11. This not only makes the processing and manufacturing of the water-blocking structure 133 convenient, but also gives the overall structure of the water-blocking structure 133 good strength. The water-blocking structure 133 and the first top wall 11 can be manufactured by machining the whole piece of blank using machining methods such as milling.

In some embodiments, a drainage groove 111 is provided on the upper side of the first top wall 11, and the drainage groove 111 communicates with the outer wall face of the first side wall 12.

The drainage groove 111 can be a structure for draining accumulated water on the upper side of the first top wall 11. By providing the drainage groove 111 on the upper side of the first top wall 11 and communicating the drainage groove 111 with the outer wall face of the first side wall 12, the accumulated water on the upper side of the first top wall 11 can flow into the drainage groove 111 and flow along the drainage groove 111 to the outer wall face of the first side wall 12 and flow down from the first compartment 1.

By way of example, the drainage groove 111 can be formed by recessing downward from the upper side face of the first top wall 11. In some embodiments, the drainage groove 111 can be manufactured synchronously with the first top wall 11 by a stamping process; and the drainage groove 111 can alternatively be machined by a milling process on the upper side face of the first top wall 11.

Some embodiments of the present application further provide an energy storage system which includes a power conversion apparatus and an energy storage apparatus provided by the technical solutions above, and the power conversion apparatus is used to electrically connect a power generation apparatus and the energy storage apparatus.

By using the power conversion apparatus to electrically connect the power generation apparatus and the energy storage apparatus, the electrical energy generated by the power generation apparatus can be stored in the energy storage apparatus through the power conversion apparatus. For example, the power generation device can be particularly a solar panel, a hydroelectric power generation device, a thermal power generation device, a wind power generation device and the like. Because the energy storage system includes the energy storage apparatus provided by the technical solutions above, the energy storage system has good reliability.

In some embodiments, a plurality of energy storage apparatuses are provided and are connected in parallel.

By including a plurality of energy storage apparatuses connected in parallel in the energy storage system, the power conversion apparatus can be electrically connected between the plurality of energy storage apparatuses connected in parallel and the power generation apparatus, so that the electrical energy generated by the power generation apparatus can be synchronously stored in the plurality of energy storage apparatuses through the power conversion apparatus.

Some embodiments of the present application provide an energy storage apparatus, which includes a first compartment 1, a second compartment 2, a third compartment 3 and a fourth compartment 4. A battery apparatus 101 is arranged in the first compartment 1 and a battery apparatus 101 is arranged in the third compartment 3. An electrical component 104 is arranged in the fourth compartment 4. A radiator of a heat exchange assembly is arranged in the second compartment 2. The third compartment 3, the first compartment 1, the fourth compartment 4, and the second compartment 2 are connected sequentially from bottom to top. The second compartment 2 includes a second top wall 24 and a second side wall 25. The second top wall 24 is provided with a second air vent 22, and the second side wall 25 is provided with a first air vent 21. The fan of the heat exchange assembly is located in the second compartment 2, and its air outlet communicates with the second air vent 22. The fourth compartment 4 communicates with the second compartment 2 through the fourth exhaust mechanism 41. The first compartment 1 includes a first side wall 12 and a first top wall 11 and a first bottom wall 14 connected to the first side wall 12. The first exhaust mechanism 13 connected to the first top wall 11 communicates the first compartment 1 with the fourth compartment 4. The third compartment 3 includes a connected third side wall and a third top wall 31 connected to the third side wall. The third exhaust mechanism 32 on the third side wall extends at least partially into the first compartment 1 through the first gas vent 141 of the first bottom wall 14, thereby achieving communication between the third compartment 3 and the first compartment 1. Since the first side wall 12 mainly plays a role in supporting and load bearing in the first compartment 1, and the first exhaust mechanism 13, which communicates the interior of the first compartment 1 with the outside, is arranged on the first top wall 11 instead of the first side wall 12, the impact of the arrangement of the first exhaust mechanism 13 on the structure of the first side wall 12 is reduced, thereby reducing the impact of the arrangement of the first exhaust mechanism 13 on the supporting effect and load-bearing capacity of the wall of the first compartment 1, facilitating an improvement in the stress condition of the energy storage apparatus and facilitating an improvement in the reliability of the energy storage apparatus.

Finally, it is to be noted that the above embodiments are only used for illustrating the technical solutions of the present application, not to limit them, and although the present application is described in detail with reference to the foregoing embodiments, those of ordinary skill in the art should understand that they can still modify the technical solutions described in the foregoing embodiments, or equivalently substitute some or all of the technical features therein, and these modifications or substitutions do not cause the essence of the corresponding technical solutions to depart from the scope of the technical solutions of the embodiments of the present application, and they should be covered by the scope of the claims and specification of the present application. In particular, the technical features mentioned in the various embodiments can be combined in any manner provided that there is no structural conflict. The present application is not limited to the specific embodiments disclosed herein, but rather includes all technical solutions falling within the scope of the claims.

## Claims

1. An energy storage apparatus, comprising:
a first compartment comprising a first top wall and a first side wall connected to each other, the first top wall being provided with a first exhaust mechanism capable of communicating the interior of the first compartment with the outside; and
a battery apparatus accommodated in the first compartment.

2. The energy storage apparatus according to claim 1, wherein the energy storage apparatus further comprises a second compartment and a heat exchange assembly, the second compartment is used to accommodate the heat exchange assembly and is connected to the upper side of the first compartment, the first compartment is capable of communicating with the second compartment through the first exhaust mechanism, the second compartment is provided with a first air vent and a second air vent, the heat exchange assembly comprises a radiator and a fan, the radiator is arranged in the second compartment, an air inlet of the fan communicates with the second compartment, and an air outlet of the fan communicates with the second air vent.

3. The energy storage apparatus according to claim 2, wherein the energy storage apparatus further comprises a thermal management pipeline which communicates the radiator with the battery apparatus.

4. The energy storage apparatus according to any one of claims 1 to 3, wherein the energy storage apparatus further comprises a third compartment, the third compartment accommodates the battery apparatus, the third compartment is connected to the lower side of the first compartment, the third compartment comprises a third top wall, the third top wall is provided with a third exhaust mechanism, and the third exhaust mechanism is capable of communicating the interior of the third compartment with the interior of the first compartment.

5. The energy storage apparatus according to claim 4, wherein the first compartment further comprises a first bottom wall opposite to the first top wall, the first bottom wall is connected to the first side wall, the first bottom wall is provided with a first gas vent, and in the vertical direction, the first gas vent overlaps at least partially with the third exhaust mechanism.

6. The energy storage apparatus according to claim 5, wherein in the vertical direction, the projection of the third exhaust mechanism is located within the projection range of the first gas vent.

7. The energy storage apparatus according to any one of claim 5 or 6, wherein at least two first compartments are provided, and the third compartment is located at the lower side of the at least two first compartments; and in the vertical direction, the exhaust mechanism of the lower first compartment of two adjacent first compartments overlaps at least partially with the first gas vent of the upper first compartment.

8. The energy storage apparatus according to claim 7, wherein in the vertical direction, the projection of the exhaust mechanism of the lower first compartment of two adjacent first compartments is located within the projection range of the first gas vent of the upper first compartment.

9. The energy storage apparatus according to claim 7 or 8, wherein the exhaust mechanism of the lower first compartment of two adjacent first compartments extends at least partially into the upper first compartment through the first gas vent.

10. The energy storage apparatus according to any one of claims 2 to 9, wherein the second compartment is provided with a blocking member for opening or closing the first air vent.

11. The energy storage apparatus according to any one of claims 2 to 10, wherein in the vertical direction, the projection of the first air vent and the second air vent is separate from the projection of the first exhaust mechanism.

12. The energy storage apparatus according to any one of claims 2 to 11, wherein in the vertical direction, the projection of the second air vent is separate from the projection of the first exhaust mechanism.

13. The energy storage apparatus according to any one of claims 2 to 12, wherein the first air vent and the second air vent are respectively arranged at two sides of the radiator.

14. The energy storage apparatus according to any one of claims 2 to 13, wherein the second compartment comprises a second top wall and a second side wall connected to each other, the second air vent is formed in the second top wall and/or the second side wall, and the fan is arranged in the second compartment and at the second air vent.

15. The energy storage apparatus according to any one of claims 2 to 13, wherein the second compartment comprises a second top wall and a second side wall connected to each other, the second air vent is formed in the second top wall and/or the second side wall, and the fan is arranged at the second air vent and extends at least partially out of the second compartment.

16. The energy storage apparatus according to any one of claim 14 or 15, wherein the first air vent and the second air vent are both arranged on the second side wall, and the first air vent and the second air vent are respectively arranged opposite to each other on two sides of the radiator.

17. The energy storage apparatus according to any one of claims 1 to 16, wherein the energy storage apparatus further comprises an electrical component and a fourth compartment, and the electrical component is arranged in the fourth compartment and electrically connected to the battery apparatus.

18. The energy storage apparatus according to claim 17, wherein in the vertical direction, the fourth compartment is arranged between the first compartment and the second compartment.

19. The energy storage apparatus according to any one of claims 2 to 18, wherein the energy storage apparatus further comprises a fire protection assembly, which comprises a tank and a spray member in communication with each other, the tank is arranged in the second compartment, and the spray member is arranged in the first compartment.

20. The energy storage apparatus according to any one of claims 2 to 19, wherein the energy storage apparatus further comprises a power conversion apparatus that is arranged in the second compartment and electrically connected to the battery apparatus.

21. The energy storage apparatus according to any one of claims 1 to 20, wherein the energy storage apparatus further comprises a power conversion apparatus that is arranged in the first compartment and electrically connected to the battery apparatus.

22. The energy storage apparatus according to any one of claims 1 to 21, wherein the first exhaust mechanism comprises a first exhaust port formed in the first top wall and a first sealing member covering the first exhaust port, the first sealing member is switchable between a first state and a second state, in the first state, the first sealing member closes the first exhaust port, and in the second state, the first sealing member opens the first exhaust port.

23. The energy storage apparatus according to claim 22, wherein the first exhaust mechanism further comprises a water-blocking structure connected to the first top wall and located at least partially on the upper side of the first top wall, and the water-blocking structure surrounds the first exhaust port.

24. The energy storage apparatus according to claim 23, wherein the water-blocking structure comprises a baffle bar connected to the first top wall and wound around the first exhaust port.

25. The energy storage apparatus according to claim 24, wherein a plurality of baffle bars are provided and are sequentially connected and wound around the first exhaust port.

26. The energy storage apparatus according to claim 24 or 25, wherein two adjacent baffle bars are glued or welded.

27. The energy storage apparatus according to any one of claims 23 to 26, wherein the water-blocking structure and the first top wall are of an integrally formed structure.

28. The energy storage apparatus according to any one of claims 23 to 26, wherein the water-blocking structure is glued or welded to the first top wall.

29. The energy storage apparatus according to any one of claims 1 to 28, wherein a drainage groove is provided on the upper side of the first top wall, and the drainage groove communicates with the outer wall face of the first side wall.

30. The energy storage apparatus according to any one of claims 1 to 29, wherein a second exhaust port is formed on the first side wall, the second exhaust port is capable of communicating the interior of the first compartment with the outside, the second exhaust port is covered with a second sealing member, which is switchable between a first state and a second state, in the first state, the second sealing member closes the second exhaust port, and in the second state, the second sealing member opens the second exhaust port.

31. An energy storage system, comprising:
a power conversion apparatus; and
one or more energy storage apparatuses according to any one of claims 1 to 30, the power conversion apparatuses being configured to electrically connect a power generation apparatus and one or more of the energy storage apparatuses.
